# EUROPEAN PATENT APPLICATION

(11) **EP 4 589 563 A1**
(43) Date of publication of application: **23.07.2025**
(21) Application number: 24218622.9
(22) Date of filing: 10.12.2024
(51) Int. Cl.: G08G 1/01, G08G 1/0967, G08G 1/16, B60W 50/14, B60W 40/04

(54) **DRIVER ASSIST SYSTEM, DRIVER ASSIST SERVER, AND DRIVER ASSIST METHOD**

(30) Priority: 16.01.2024 JP 2024004542
(71) Applicant: TOYOTA JIDOSHA KABUSHIKI KAISHA, Aichi-ken, 471-8571 (JP)
(72) Inventor: UNO, Satoshi, TOYOTA-SHI, AICHI-KEN, 471-8571 (JP)
(74) Representative: Cabinet Beau de Loménie

(57) **Abstract**

A driver assist system (1) is provided with a plurality of vehicles (100) at which predetermined driver assist is performed and a server (200) configured to be able to communicate with the vehicles (100). The server (200) is configured to set an assist region for making the vehicles (100) perform driver assist and set as an assist road segment a road segment with a high frequency of occurrence of at least one of accidents and near misses from among the road segments of intersections in that assist region, based on predetermined information stored in the server (200), and send information relating to a specific intersection having that assist road segment to the vehicles (100). The vehicles (100) are configured to receive information relating to that specific intersection from the server (200), and perform the driver assist when running on the assist road segment.

## Description

### FIELD

The present invention relates to a driver assist system, driver assist server, and driver assist method.

### BACKGROUND

Japanese Unexamined Patent Publication No. 2014-146289 discloses a conventional driver assist system which collects information relating to a narrow escape event or close call event (below, referred to as a "near miss") of a driver of a vehicle running through an intersection or other specific area along with the location of occurrence of the near miss and reports to the driver the information relating to the near miss around the current position of the vehicle based on the current position of the vehicle.

### SUMMARY

As road segments heading toward the center of an intersection, in addition to the road segment on which the host vehicle is running, there are other road segments crossing the running road segment of the host vehicle from for example the left direction, right direction, etc. The above explained conventional driver assist system reported information relating to the near miss around the current position of the vehicle to the driver, so even if the location of occurrence of the near miss had been a separate road segment different from the running road segment of the host vehicle, the information relating to the near miss would be reported to the driver. For this reason, information relating to a near miss unnecessary for the driver would end up being reported and the report of information relating to the near miss would be liable to end up being felt bothersome by the driver.

The present invention was made focusing on such a problem and has as its object to keep unnecessary driver assist from ending up being performed for a driver.

To solve the above problem, a driver assist system according to one aspect of the present invention is provided with a plurality of vehicles at which predetermined driver assist is performed and a server configured to be able to communicate with the vehicles. The server is configured to set an assist region for making the vehicles perform driver assist and set as an assist road segment a road segment with a high frequency of occurrence of at least one of accidents and near misses from among the road segments of intersections in that assist region, based on predetermined information stored in the server, and send information relating to a specific intersection having that assist road segment to the vehicles. The vehicles are configured to receive information relating to that specific intersection from the server, and perform the driver assist when running on the assist road segment.

Further, a driver assist server according to one aspect of the present invention is provided with a communication part configured to be able to communicate with vehicles, a storage part for storing information and a processing part. The processing part is configured to set an assist region for making the vehicles perform predetermined driver assist based on predetermined information stored in the storage part, set, as an assist road segment where the driver assist is performed, a road segment with a high frequency of occurrence of at least one of accidents and near misses from among the road segments of intersections in that assist region based on predetermined information; and send information relating to a specific intersection having that assist road segment to the vehicles.

Further, a driver assist method of vehicles according to one aspect of the present invention includes setting an assist region for making the vehicles perform predetermined driver assist based on predetermined information stored in a server, setting, as an assist road segment, a road segment with a high frequency of occurrence of at least one of accidents and near misses from among the road segments of intersections in that assist region based on predetermined information, and making the vehicles perform that driver assist when the vehicles are running on that assist road segment.

According to these aspects of the present invention, it is possible to keep driver assist from unnecessarily being performed in a road segment with low frequency of occurrence of accidents and near misses, so it is possible to keep a driver from feeling bothered by that driver assist.

### BRIEF DESCRIPTION OF DRAWINGS

FIG. 1 is a schematic view of the configuration of a driver assist system according to a first embodiment of the present invention.
FIG. 2 is a schematic view of the system configuration of a vehicle according to the first embodiment of the present invention.
FIG. 3 is a view showing one example of an intersection.
FIG. 4 is a schematic view of the configuration of a driver assist server according to the first embodiment of the present invention.
FIG. 5 is a flow chart for explaining one example of specific intersection extraction processing according to the first embodiment of the present invention performed between each vehicle and a driver assist server 200.
FIG. 6 is a flow chart for explaining one example of intersection assist processing according to the first embodiment of the present invention performed between each vehicle and a driver assist server.
FIG. 7 is a schematic view of the configuration of a driver assist server according to a second embodiment of the present invention.
FIG. 8 is a flow chart for explaining one example of specific intersection extraction processing according to the second embodiment of the present invention.
FIG. 9 is a schematic view of the configuration of a driver assist server according to a third embodiment of the present invention.
FIG. 10 is a flow chart for explaining one example of specific intersection extraction processing according to the third embodiment of the present invention.
FIG. 11 is a flow chart for explaining one example of intersection assist processing according to the third embodiment of the present invention.
FIG. 12 is a schematic view of the configuration of a driver assist server according to a fourth embodiment of the present invention.
FIG. 13 is a flow chart for explaining one example of processing which the driver assist server performs for setting a driver assist level of an assist road segment.
FIG. 14 is one example of processing which a control device of a vehicle performs for performing intersection assist corresponding to a driver assist level.

### DESCRIPTION OF EMBODIMENTS

Below, referring to the drawings, embodiments of the present disclosure will be explained in detail. Note that, in the following explanation, similar components will be assigned the same reference notations.

### (First Embodiment)

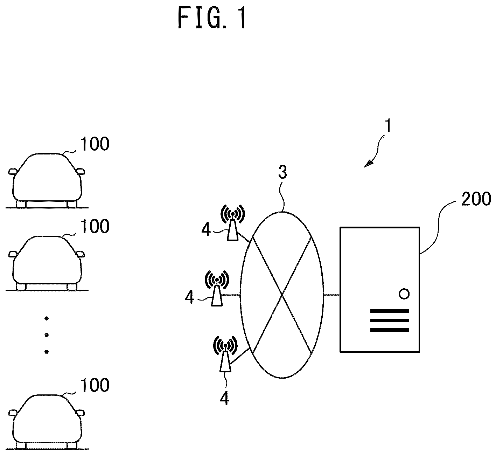

FIG. 1 is a schematic view of the configuration of a driver assist system 1 according to a first embodiment of the present disclosure.

The driver assist system 1 is provided with a plurality of vehicles 100 and a driver assist server 200.

The vehicles 100 and the driver assist server 200 are able to communicate with each other through a network 3 configured by optical communication lines etc. The vehicles 100 are for example connected to the network 3 through wireless base stations 4 etc. The driver assist server 200 is for example connected to the network 3 through a not shown gateway etc.

Details will be explained later, but each of the vehicles 100 periodically transmits vehicle information relating to that vehicle 100 to the driver assist server 200. The driver assist server 200 stores the received vehicle information in a data base, extracts any intersection having a road segment covered by intersection assist (below, referred to as an "assist road segment") (below, referred to as a "specific intersection") from among the intersections on a map based on the stored vehicle information, and sends intersection assist information including information relating to the specific intersection to the vehicles 100. The vehicles 100 perform intersection assist based on the driver assist information.

Note that, "intersection assist" is driver assist performed at a vehicle 100. It is driver assist performing at least one of reporting to a driver, brake assist, and automatic braking in accordance with need when running on a road segment heading toward an intersection.

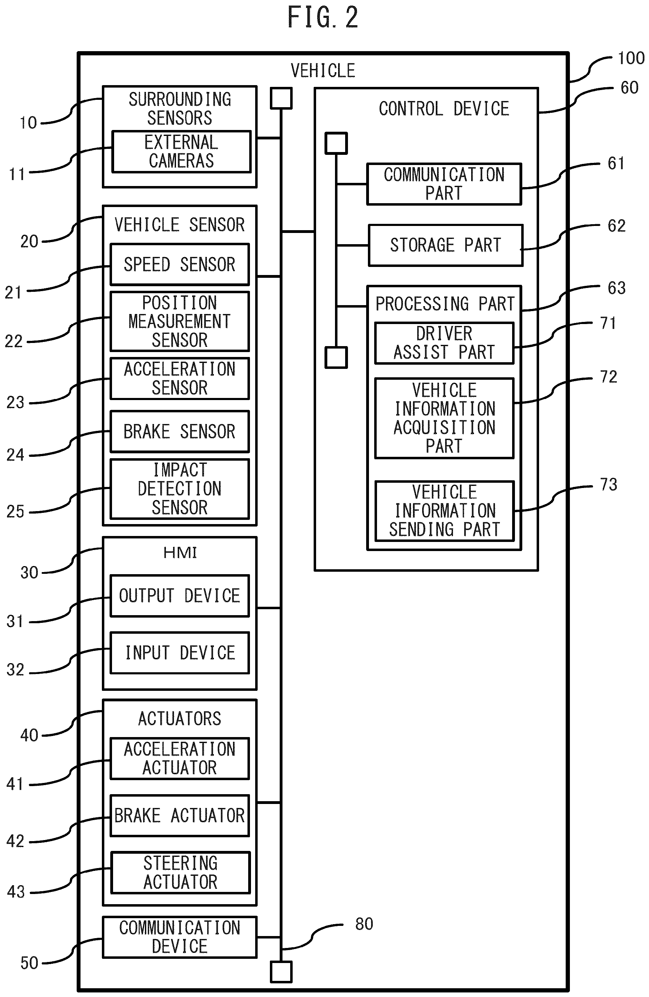

Below, referring to FIG. 2 to FIG. 4, the configurations of the vehicles 100 and driver assist server 200 will be explained.

FIG. 2 is a schematic view of the system configuration of a vehicle 100.

The vehicle 100 is provided with surrounding sensors 10, vehicle sensors 20, an HMI (human machine interface) 30, actuators 40, a communication device 50 and a control device 60. The surrounding sensors 10, vehicle sensors 20, HMI 30, actuators 40, communication device 50 and control device 60 are connected to be able to communicate through an internal vehicle network 80 based on the standard of the Control Area Network.

The surrounding sensors 10 are sensors for generating surrounding data showing the situation in the surroundings of the vehicle 100. In the present embodiment, as the surrounding sensors 10, one or more external cameras 11 for capturing the surroundings of the vehicle 100 are provided. The external cameras 11 capture the surroundings of the vehicle 100 by a predetermined frame rate (for example, 10 Hz to 40 Hz) and generate surrounding images in which the surroundings of the vehicle 100 are displayed. The external cameras 11 send the generated surrounding images as surrounding data to the control device 60 each time generating the surrounding images.

Note that instead of the external cameras 11 or in addition to the external cameras 11, it is also possible to provide as a surrounding sensor 10 a distance measuring sensor for measuring the distance to other vehicle, pedestrian, or other object present in the surroundings of the vehicle 100. As an example of a distance measuring sensor, for example, a lidar (light detection and ranging device) firing a laser and measuring distance based its reflected light, a millimeter wave radar sensor measuring distance based on the reflected wave, etc. may be mentioned.

The vehicle sensors 20 are sensors for generating various data relating to a vehicle 100. In the present embodiment, as the vehicle sensors 20, a speed sensor 21 for generating speed data showing a running speed of the vehicle 100, a position measurement sensor 22 for generating a latitude and longitude and other current position data showing the current position of the vehicle 100, an acceleration sensor 23 for generating acceleration data showing an acceleration of the vehicle 100, a brake sensor 24 for generating brake operation data showing whether a brake pedal of the vehicle 100 has been depressed, a collision detection sensor 25 for generating air bag operation data showing whether an air bag of the vehicle 100 had been deployed, etc. are provided. However, the vehicle sensors 20 are not limited to these sensors 21 to 25. The sensors 21 to 25 send the acquired data to the control device 60.

The HMI 30 is a user interface for transfer of information between the vehicle 100 and its occupants. The HMI 30 is provided with output devices 31 for providing notifications to the vehicle occupants through the physical senses (for example, sight, hearing, touch, etc.) of the vehicle occupants and input devices 32 for the vehicle occupants to perform input operations and response operations. In the present embodiment, as output devices 31, a display (for example, meter display, center display, heads-up display, etc.) and speakers are provided. As the input devices 32, a touch panel and microphone are provided.

The HMI 30 displays information (for example, text information or graphic information) corresponding to a display signal received from the control device 60 on the display and outputs audio corresponding to an audio signal from the speakers. Further, the HMI 30 sends data input by the touch panel or input by voice by the vehicle occupant through the input devices 32 to the control device 60.

The HMI 30 may be mounted in the vehicle 100 in advance or may be a smartphone or other terminal held by a vehicle occupant. In the latter case, for example, information may be transferred by short distance wireless between the vehicle 100 and terminal of the vehicle occupant, the terminal of the vehicle occupant and an outside server (not shown) may communicate with each other, and information may be transferred indirectly through the server.

The actuators 40 are devices used for controlling operations of the vehicle 100. In the present embodiment, as the actuators 4, acceleration actuators 41 for controlling acceleration of the vehicle 100(for example, at least one of the engine and motor), brake actuators 42 for controlling braking of the vehicle 100 (for example, a hydraulic actuator), and steering actuators 43 for controlling steering of the vehicle 100 (for example, a steering motor) are provided.

The communication device 50 has a communication interface circuit for connecting the vehicle 100 to the network 3 (see FIG. 1) through the wireless base stations 4 (see FIG. 1) and is configured to be able to communicate with the driver assist server 200 through the network 3.

The control device 60 is an ECU (electronic control unit) provided with a communication part 61, storage part 62, and processing part 63.

The communication part 61 has a communicate interface circuit for connecting the control device 60 to the internal vehicle network 80. The communication part 61 supplies the various data received from the sensors 10 and 20, the HMI 30 and the communication device 50, etc. to the processing part 63. Further, the communication part 51 outputs the various signals output from the processing part 63 to the HMI 30, the actuators 40 and the communication device 50, etc.

The storage part 62 has an HDD (hard disk drive), SSD (solid state drive), semiconductor memory, or other storage medium and stores various computer programs and data etc. used for processing at the processing part 63.

The processing part 63 has one or more CPUs (central processing units) and their peripheral circuits and runs various computer programs stored in the storage part 62. The processing part 63 is for examples a processor. The processor may further have other processing circuits such as a logical operation unit, numerical operation unit, or graphic processing unit. The processing part 63 performs processing in accordance with a computer program so as to function as a driver assist part 71, a vehicle information acquisition part 72 and a vehicle information sending part 73 and operate as a function part (module) realizing a predetermined function. In the following explanation, if explaining the processing using the function parts 71-73 as subjects, the processing part 63 runs programs for realizing the function parts 71-73.

The driver assist part 71 performs driver assist for the driver. The driver assist part 71 provides, as driver assist, for example, a precrash safety system (PCS), intersection assist, etc.

The precrash safety system is driver assist performing at least one of reporting to the driver, brake assist, automatic braking, and steering assist if there is a possibility of colliding with various objects (other vehicles, motorcycles, bicycles, pedestrians, walls, etc.) detected by the surrounding sensors 10.

The intersection assist, as explained above, is driver assist performing at least one of reporting to the driver, brake assist, and automatic braking when running on a road segment heading toward an intersection.

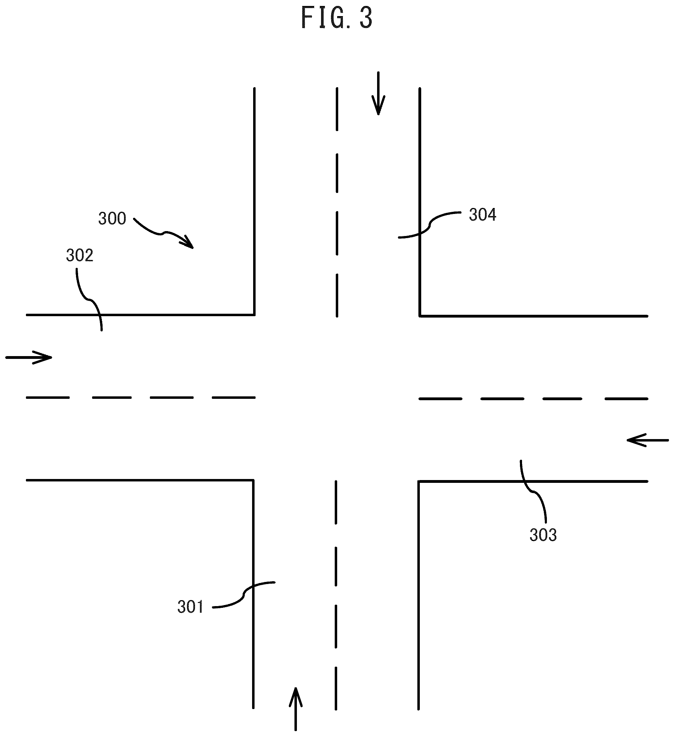

In this regard, there are several road segments heading toward an intersection. For example, in the example shown in FIG. 3, as road segments heading toward the intersection 300, there are the four road segments of the first road segment 301, second road segment 302, third road segment 303, and fourth road segment 304 present. Among the road segments 301 to 304, there may be road segments in which accidents and near misses will easily occur due to the arrangement of the buildings in the surroundings of the intersection and their heights and, further, differences in road widths and other facets of the surrounding road environment of the intersection and may be road segments in which they will not. For this reason, if performing intersection assist even when running on a road segment in which accidents and near misses are not likely to occur, some drivers are liable to end up feeling the intersection assist is bothersome.

Therefore, in the present embodiment, among the several road segments heading toward the intersection, a road segment with a high frequency of occurrence of accidents and near misses is set as an "assist road segment" covered by intersection assist, and intersection assist is performed when running on the assist road segment. Due to this, when running on a road segment in which accidents and near misses are not likely to occur, it is possible to keep intersection assist from ending up being unnecessarily performed.

The vehicle information acquisition part 72 periodically acquires vehicle information relating to the vehicle 100 for sending to the driver assist server 200.

The vehicle information includes, for example, the data necessary for the driver assist server 200 side to judge whether a collision has occurred at the vehicle 100 sending that vehicle information, data necessary for it to judge whether an operation has been performed at the vehicle 100 for avoiding a collision (below, referred to as a "collision avoiding operation"), data necessary for it to judge whether an operation has been performed for forewarning a driver of danger etc. thereby enabling the driver to prevent that in advance at the vehicle 100 (below referred to as a "danger forewarning operation"), etc.

In the present embodiment, as vehicle information, speed data, acceleration data, current position data, deceleration data, brake operation data, air bag deployment data, precrash safety operation data (any warning operation, any brake assist operation, any automatic braking operation, any steering assist operation), intersection assist operation data (any warning operation, any brake assist operation, any automatic braking operation), etc. are acquired. However, the vehicle data is not limited to these data.

The vehicle information sending part 73 sends the acquired vehicle information linked with the vehicle ID (vehicle license plate number) and time of acquisition of the vehicle information etc. to the driver assist server 200.

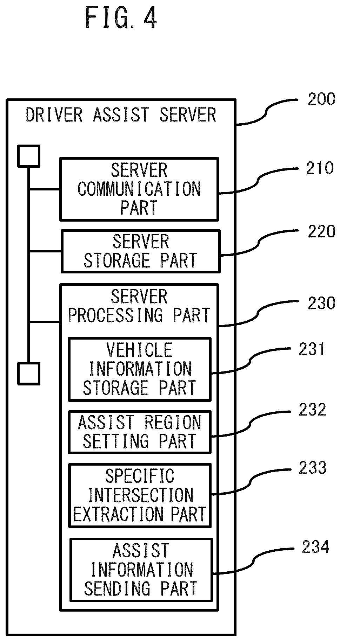

FIG. 4 is a schematic view of the configuration of a driver assist server 200.

The driver assist server 200 is provided with a server communication part 210, server storage part 220, and server processing part 230.

The server communication part 210 has a communication interface circuit for connecting the driver assist server 200 to the network 3 (see FIG. through for example a gateway etc. (see FIG. 1) and is configured to be able to communicate with the vehicles 100 (more specifically, the communication devices 50 of the vehicles 100) through the network 3.

The server storage part 220 has an HDD, SSD, semiconductor memory, or other storage medium and stores various computer programs and data etc. used for processing at the server processing part 230.

The server processing part 230 has one or more CPUs (central processing units) and their peripheral circuits and runs various computer programs stored in the server storage part 220. The server processing part 230 is for example a processor. The processor may further have other processing circuits such as a logical operation unit, numerical operation unit, or graphic processing unit. The server processing part 230 performs processing in accordance with a computer program so as to function as a vehicle information storage part 231, an assist region setting part 232, a specific intersection extraction part 233 and an assist information sending part 234 and operate as a function part (module) realizing a predetermined function. In the following explanation, if explaining the processing using the function parts 231-234 as subjects, the server processing part 230 runs programs for realizing the function parts 231-234.

The vehicle information storage part 231 stores vehicle information received from the vehicles 100 in the database for each grid region based on the current position data in the vehicle information. A grid divides a map into regions of substantially the same sizes based on the longitude and latitude. The vehicle information stored in the database can, for example, be made vehicle information of a most recent predetermined time period.

The assist region setting part 232, for example, evaluates the frequency of occurrence of accidents and near misses at each grid region by three stages of level 1 to level 3 based on the vehicle information (features) of the grid regions by using a machine learning model trained in advance and sets the grid region of the level 3 with the highest frequency of occurrence of accidents and near misses as the "assist region."

The specific intersection extraction part 233 extracts from among the intersections in the assist region an intersection having an assist road segment covered by intersection assist, that is, a "specific intersection".

In the present embodiment, the specific intersection extraction part 233 first extracts from the vehicle information in the assist region the vehicle information acquired in a range of a predetermined distance from a center of each intersection in the assist region based on current position data inside the vehicle information.

Next, based on the current position data inside the extracted vehicle information, a grasp is obtained of at which road segment of each intersection that vehicle information was acquired from. For each road segment, the number of occurrences of collisions and number of occurrence of collision avoiding operations are counted. For example, in the example shown in the above-mentioned FIG. 3, as road segments heading toward the intersection 300, there are the four road segments of the first road segment 301, second road segment 302, third road segment 303, and fourth road segment 304 present, so the number of occurrences of collisions and number of occurrence of collision avoiding operations are counted for each of the road segments 301 to 304.

Finally, a road segment with a number of occurrence of collisions of greater than or equal to a predetermined number and a road segment with a number of occurrences of collision avoiding operations greater than or equal to a predetermined number are respectively set as "assist road segments" and an intersection having an assist road segment is extracted as a "specific intersection". That is, a road segment with a high frequency of occurrence of at least one of accidents and near misses is set as an "assist road segment" and an intersection having an assist road segment is extracted as a "specific intersection".

Note that the number of occurrence of collisions and the number of occurrence of collision avoiding operations can, for example, be grasped and counted in the following way. That is, if an air bag is deployed, it is possible to assume that a collision has occurred. Therefore, it is possible to obtain a grasp of the number of occurrence of collisions, for example, based on data on the deployment of air bags.

Further, if any of a precrash safety warning, brake assist, automatic braking, and steering assist has been performed, it may be considered that a collision avoiding operation had been performed by the driver assist function. Therefore, the number of occurrences of collision avoiding operations can, for example, be grasped based on the data of precrash safety operations. Further, even if a sudden deceleration has been performed, it may be considered that a collision avoiding operation had actually been performed. Therefore, the number of occurrences of collision avoiding operations can also be grasped based on acceleration data. Of course, the number of occurrences of collision avoiding operations can also be grasped based on the precrash safety operation data and acceleration data.

The assist information sending part 234 sends intersection assist information including information relating to a specific intersection to the vehicles 100 according to need.

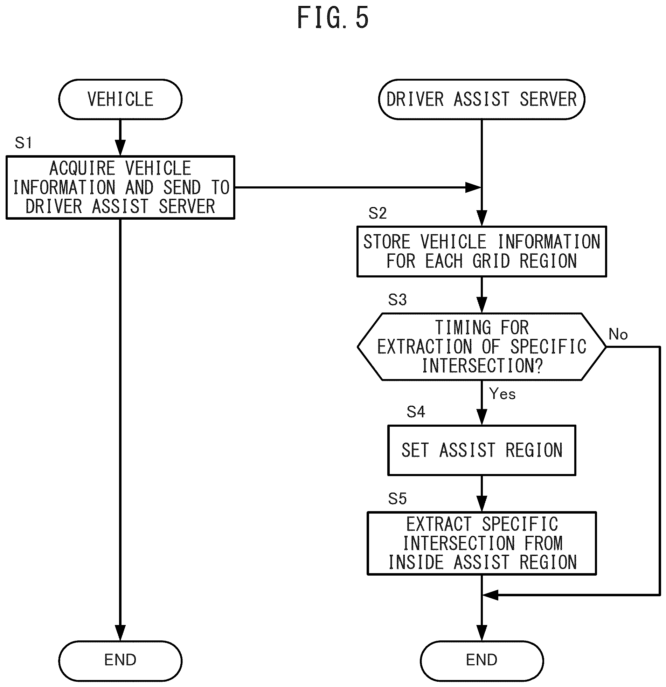

FIG. 5 is a flow chart for explaining one example of specific intersection extraction processing performed between the vehicles 100 and the driver assist server 200.

At step S1, the control device 60 of a vehicle 100 periodically (for example, every other minute) acquires vehicle information of the vehicle 100 and sends the acquired vehicle information to the driver assist server 200.

At step S2, if receiving vehicle information from the vehicle 100, the driver assist server 200 divides the vehicle information for each grid region based on the current position data in the vehicle information and stores it in the data base.

At step S3, the driver assist server 200 judges whether the timing is one for extraction of a specific intersection. The driver assist server 200 can judge that the timing is one for extraction of a specific intersection if, for example, a predetermined time period has elapsed from the previous timing of extraction of a specific intersection. If the timing is one for extraction of a specific intersection, the driver assist server 200 proceeds to the processing of step S4. On the other hand, if the timing is not one for request of extraction of a specific intersection, the driver assist server 200 ends the processing.

At step S4, the driver assist server 200 evaluates the frequency of occurrence of accidents and near misses at each grid region by the three stages of level 1 to level 3 and sets as the assist region the grid region of level 3 of the highest frequency of occurrence of accidents and near misses.

At step S5, the driver assist server 200 extracts from among the intersections in the assist region an intersection having an assist road segment, that is, a specific intersection. As explained above, in the present embodiment, among the road segments of each intersection in the assist region, a road segment with a number of occurrence of collisions greater than or equal to a predetermined number and a road segment with a number of occurrence of collision avoiding operations greater than or equal to a predetermined number are respectively set as "assist road segments".

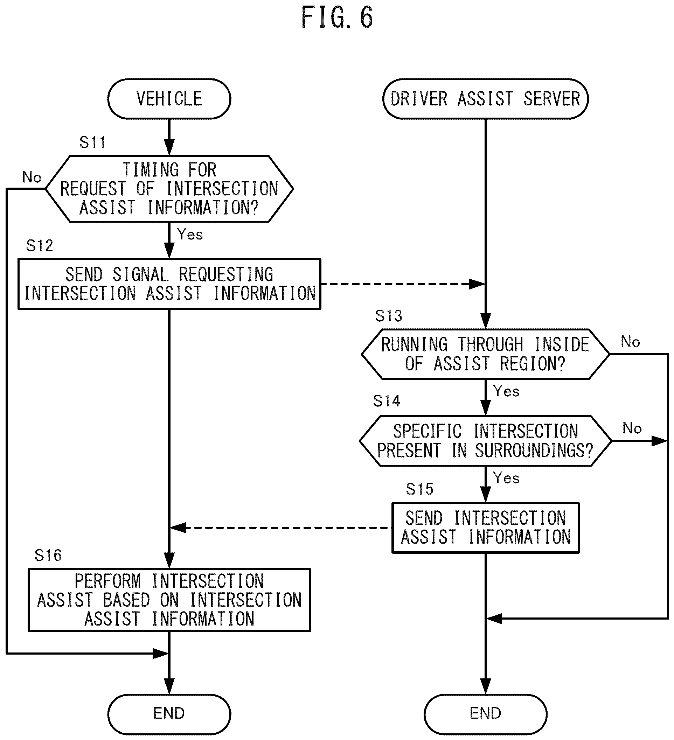

FIG. 6 is a flow chart for explaining one example of intersection assist processing performed between the vehicles 100 and the driver assist server 200.

At step S 11, the control device 60 of a vehicle 100 judges whether the timing is one for request of intersection assist information. The vehicle 100 can judge that the timing is one for request of intersection assist information if, for example, a predetermined time period has elapsed from when last requesting intersection assist information. If the timing is one for request of intersection assist information, the control device 60 proceeds to the processing of step S12. On the other hand, if the timing is not one for request of intersection assist information, the control device 60 ends the current processing.

At step S12, the control device 60 of the vehicle 100 sends an assist information request signal to the driver assist server 200. The assist information request signal includes, for example, current position data of the host vehicle.

At step S13, if receiving the assist information request signal, the driver assist server 200 judges whether the vehicle sending that signal is running in an assist region based on the current position data contained in that signal. If the vehicle sending the assist information request signal is running in an assist region, the driver assist server 200 proceeds to the processing of step S14. On the other hand, if the vehicle sending the assist information request signal is not running in an assist region, the driver assist server 200 ends the current processing.

At step S14, the driver assist server 200 judges whether there is a specific intersection present around the vehicle sending the signal based on the current position data included in the assist information request signal. If there is a specific intersection present around the vehicle sending the signal, the driver assist server 200 proceeds to the processing of step S15. On the other hand, if there is not a specific intersection present around the vehicle sending the signal, the driver assist server 200 ends the current processing.

At step S15, the driver assist server 200 sends information relating to a specific intersection around the vehicle sending the assist information request signal (intersection assist information) to the vehicle sending the signal.

At step S16, the control device 60 of the vehicle 100 performs intersection assist based on the received intersection assist information. For example, the control device 60 judges if the host vehicle is running on an assist road segment based on the intersection assist information and current position data and, if the host vehicle is running on an assist road segment, reports, as intersection assist, that the host vehicle is running on an assist road segment through the HMI 30. Further, when the running speed of the host vehicle is greater than or equal to a predetermined speed etc., it is possible to control the brake actuator 42 to perform brake assist or automatic braking.

Note that if, at step S13, it was judged that the vehicle sending the assist information request signal was not running in an assist region and if, at step S14, it was judged that that there was no specific intersection around the vehicle sending the assist information request signal, that fact may be notified from the driver assist server 200 to the vehicle sending the assist information request signal and that fact may be reported to the driver at the vehicle 100.

Further, in FIG. 6, the explanation was given using an example of the driver assist server 200 passively sending intersection assist information to the vehicles 100 if requested from the vehicle 100 side, but the invention is not limited to this. It is also possible for the driver assist server 200 to actively send the intersection assist information to vehicles with a high need for the intersection assist information. For example, it is also possible for the driver assist server 200 to send intersection assist information to vehicles 100 around the specific intersection based on current position data etc. received from the vehicles 100. Further, for example, it is also possible to send intersection assist information to an infrastructure facility installed at an intersection and able to communicate with vehicles around the intersection to thereby send intersection assist information through the infrastructure facility installed at the specific intersection to vehicles 100 around the specific intersection.

Furthermore, in FIG. 6, at step S16, the vehicle 100 side judged whether to perform intersection assist based on the intersection assist information received from the driver assist server 200, but the invention is not limited to this. For example, it is also possible for the driver assist server 200 side to judge whether vehicles 100 are running in an assist road segment based on their current position data and, if the vehicles 100 are running in the assist road segment, have the driver assist server 200 instruct the vehicles 100 to perform intersection assist. That is, it is also possible to have the driver assist server 200 side judge whether to perform intersection assist for each vehicle 100.

The driver assist system 1 according to the embodiments explained above is provided with several vehicles 100 at which intersection assist (predetermined driver assist) is performed and a server 200 configured to be able to communicate with the vehicles 100. The server 200 is configured to set an assist region for making the vehicles 100 perform intersection assist based on vehicle information (predetermined information) stored in the server 200, to set as an assist road segment a road segment with a high frequency of occurrence of at least one of accidents and near misses from among the road segments of an intersection in the assist region, and send information relating to the specific intersection having the assist road segment to the vehicles 100. The vehicles 100 are configured to receive information relating to a specific intersection from the server 200 and perform intersection assist when running on an assist road segment.

Due to this, it is possible to keep an intersection assist from being performed at a road segment with a low frequency of occurrence of accidents and near misses, so it is possible to keep a driver from ending up feeling bothered due to intersection assist. On the other hand, intersection assist is performed at the assist road segment with the high frequency of occurrence of accidents and near misses, so it is possible to suitably assist safe driving of a driver at an intersection.

Note that, in the present embodiment, the server 200 is configured to collect vehicle information (predetermined information) from the vehicles 100. The vehicle information includes at least one of data enabling judgment of whether a collision has occurred at the vehicles 100 and data enabling judgment of whether a collision avoidance operation had been performed for avoiding a collision at the vehicles 100.

Due to this, it is possible to set an assist region where each vehicle 100 is made to perform an intersection assist based on the latest vehicle information collected from the vehicles 100 and possible to set from among the road segments of the intersection in the assist region, a road segment with a high frequency of occurrence of at least one of accidents and near misses as an assist road segment.

### (Second Embodiment)

Next, a second embodiment of the present invention will be explained. The present embodiment differs from the first embodiment on the point of judging whether among the road segments of a specific intersection, there is a road segment which does not correspond to an assist road segment, but is preferably covered by intersection assist (below, referred to as a "quasi assist road segment") and, if there is a quasi assist road segment present, performing intersection assist for that quasi assist road segment as well in addition to the assist road segment. Below, this point of difference will be focused on in the explanation.

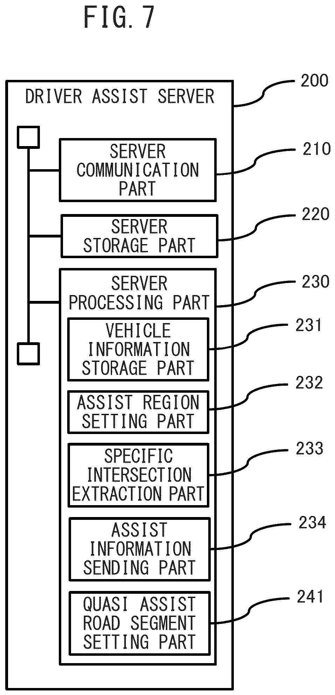

FIG. 7 is a schematic view of the configuration of a driver assist server 200 according to the present embodiment.

The server processing part 230 of the driver assist server 200 according to the present embodiment is further provided with a quasi assist road segment setting part 241.

The quasi assist road segment setting part 241 sets as a quasi assist road segment, from among the road segments of a specific intersection, a road segment not satisfying the criteria for setting an assist road segment but satisfying the criteria for setting a quasi assist road segment.

Specifically, the quasi assist road segment setting part 241 extracts, from the specific intersections, a specific intersection where a road segment intersecting the assist road segment (below, referred to as an "intersecting road segment") is not set as an assist road segment, judges for each intersecting road segment of the specific intersection extracted whether it satisfies the criteria for setting a quasi assist road segment, and sets an intersecting road segment satisfying the criteria for setting a quasi assist road segment as a "quasi assist road segment".

For example, in the intersection 300 shown in FIG. 3 explained above, if only the first road segment 301 is set as the assist road segment, the second road segment 302 and third road segment 303 become intersecting road segments of the first road segment 303 of the assist road segment. Therefore, in this case, the second road segment 302 and third road segment 303 are respectively judged for whether they satisfy the criteria for setting a quasi assist road segment.

Note that in the present embodiment, the degree of poor visibility of an intersecting road segment in the case of trying to view the intersecting road segment from an assist road segment being greater than or equal to a certain degree is made the criteria for setting a quasi assist road segment. That is, it is judged whether to set an intersecting road segment as a quasi assist road segment based on the visibility of the intersecting road segment from the assist road segment. The degree of poor visibility of the intersecting road segment can be judged based on for example the height or number of buildings constructed near corners of the intersection, the road width of the assist road segment, the road width of the intersecting road segment, etc. This information can, for example, be obtained from map information etc. For simplification, for example, the fact of a building of greater than or equal to a predetermined height being present near a corner of an intersection can be made the criteria for setting a quasi assist road segment. Further, the degree of poor visibility of the intersecting road segment can, for example, be judged based on images of the surroundings when collecting images of surroundings captured by external cameras 11 from the vehicles 100 etc.

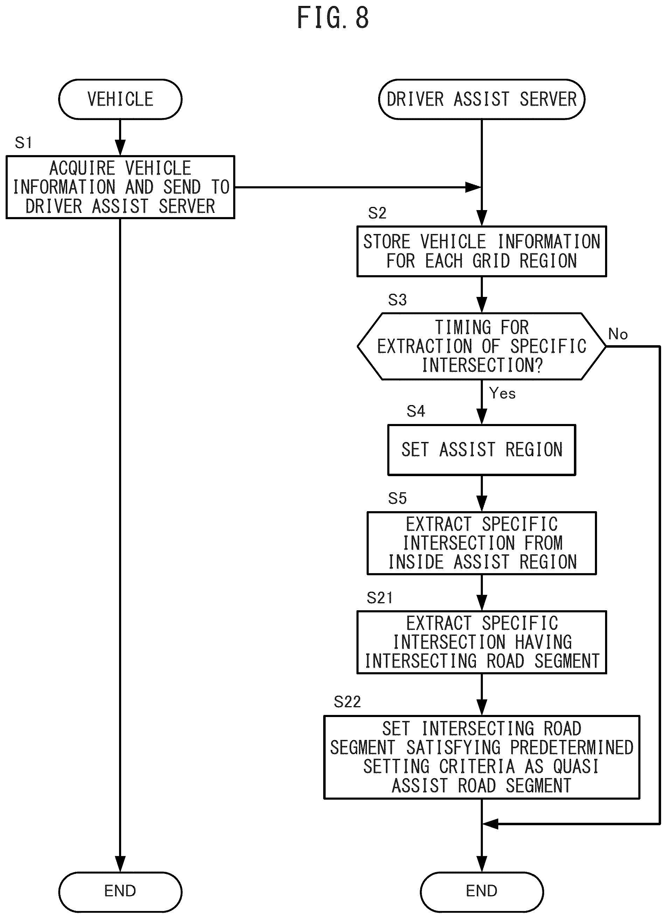

FIG. 8 is a flow chart for explaining one example of specific intersection extraction processing according to the present embodiment. In FIG. 8, the content of the processing from steps S1 to S5 is similar to the first embodiment, so explanations will be omitted here.

At step S21, the driver assist server 200 extracts from among the specific intersections, a specific intersection where an intersecting road segment intersecting the assist road segment is not set as an assist road segment.

At step S22, the driver assist server 200 judges for each intersecting road segment of each specific intersection extracted at step S21 whether it satisfies the criteria for setting a quasi assist road segment and sets as a quasi assist road segment an intersecting road segment satisfying the criteria for setting a quasi assist road segment.

In the present embodiment, the intersection assist information sent from the driver assist server 200 to the vehicles 100 includes information relating to any quasi assist road segments in addition to information relating to the assist road segments. Further, the vehicles 100 perform intersection assist when running on the assist road segments and the quasi assist road segments toward the intersection.

The server 200 according to the embodiments explained above is configured to judge whether to set an intersecting road segment as a quasi assist road segment resembling an assist road segment based on visibility of the intersecting road segment from the assist road segment if there is an intersecting road segment intersecting the assist road segment among the road segments of a specific intersection and that intersecting road segment is not set as an assist road segment. Further, the vehicles 100 are configured so as to perform intersection assist even when running on a quasi assist road segment.

An accident or near miss in an assist road segment may be due to another vehicle running in an intersecting road segment. In particular, it is believed that such a possibility becomes higher in a specific intersection in which visibility along the intersecting road segment from the assist road segment is poor. For this reason, an intersecting road segment in which visibility from the assist road segment is poor can be set as a quasi assist road segment and intersection assist may be performed in that quasi assist road segment as well so as to reduce the frequency of occurrence of accidents or near misses at the specific intersection.

### (Third Embodiment)

Next, a third embodiment of the present invention will be explained. The present embodiment differs from the above embodiments on the point that intersection assist can be performed in accordance with need not only inside a grid region of level 3 where the frequency of occurrence of accidents and near misses is the highest, but also inside grid regions of level 1 and level 2. Below, this point of difference will be focused on in the explanation.

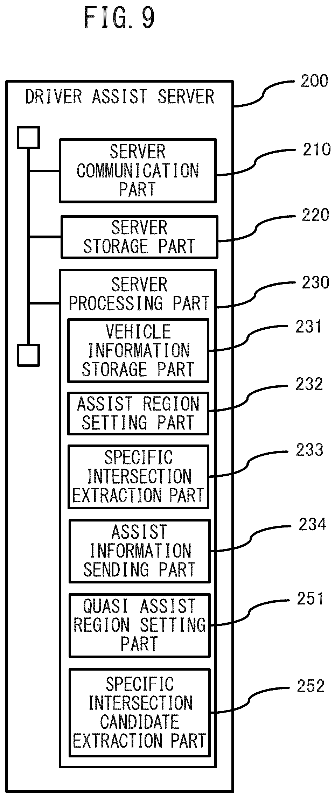

FIG. 9 is a schematic view of the configuration of a driver assist server 200 according to the present embodiment.

The server processing part 230 of the driver assist server 200 according to the present embodiment is further provided with a quasi assist region setting part 251 and specific intersection candidate extraction part 252.

The quasi assist region setting part 251 selects a grid region for performing intersection assist from among the grid regions of level 1 or level 2 and sets the selected grid region as a quasi assist region.

For example, the quasi assist region setting part 251 can set a grid region of level 1 or level 2 adjoining an assist region as a quasi assist region. However, the method of setting a quasi assist region is not limited to such a method.

For example, the quasi assist region setting part 251 may set a grid region of level 1 or level 2 adjoining an assist region in which a predetermined number of specific intersections are present as a quasi assist region. Further, among grid regions of level 1 or level 2 adjoining an assist region in which a predetermined number of specific intersections are present, the quasi assist region setting part 251 may also set a grid region of level 1 or level 2 in which a predetermined number of specific intersections are present as a quasi assist region.

The specific intersection candidate extraction part 252 extracts an intersection having an assist road segment candidate as a candidate for an assist road segment from among the intersections in the quasi assist region, that is, a specific intersection candidate. The method of extraction of a specific intersection candidate is similar to the method of extraction of a specific intersection explained above. A road segment with a high frequency of occurrence of at least one of accidents and near misses is set as an assist road segment candidate from among the road segments of intersections in the quasi assist region and an intersection having the assist road segment candidate is extracted as a specific intersection candidate.

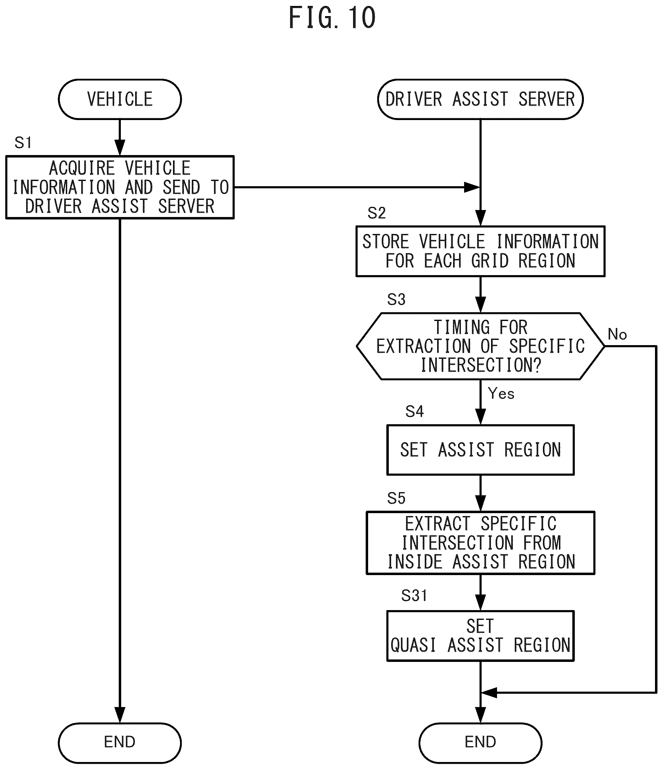

FIG. 10 is a flow chart for explaining one example of specific intersection extraction processing according to the present embodiment. In FIG. 10, the content of the processing from steps S1 to S5 is similar to the first embodiment, so explanations will be omitted here.

At step S31, the driver assist server 200 selects a grid region for performing intersection assist from among the grid regions of level 1 or level 2 and sets the selected grid region as a quasi assist region.

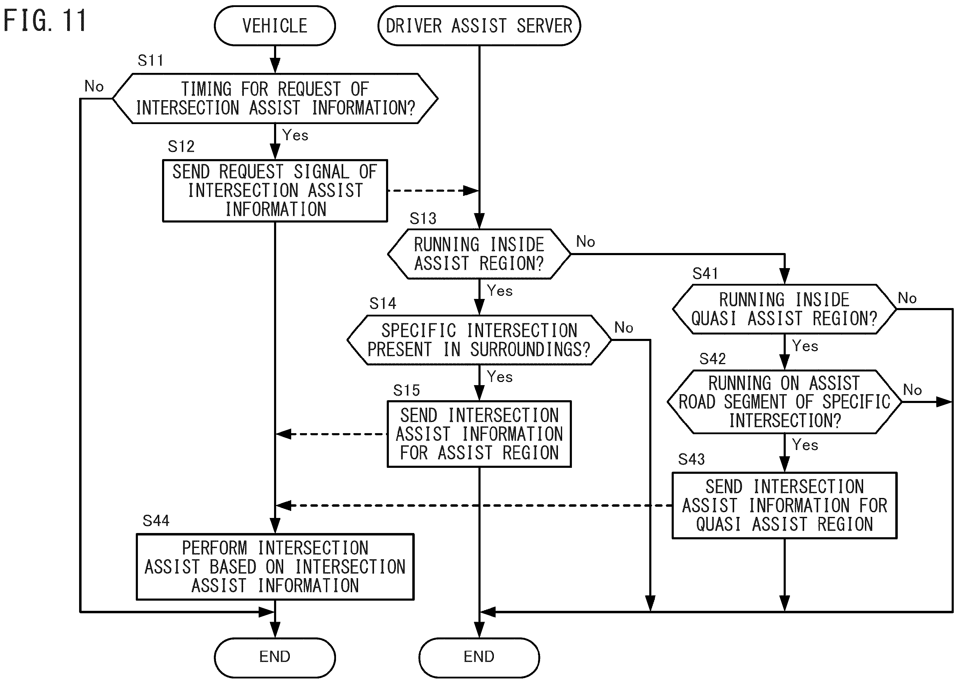

FIG. 11 is a flow chart for explaining one example of intersection assist processing according to the present embodiment. In FIG. 11, the content of the processing from steps S11 to S 15 is similar to the first embodiment, so explanations will be omitted here.

At step S41, the driver assist server 200 judges whether the vehicle sending the signal is running in a quasi assist region based on the current position data included in the assist information request signal. If the vehicle sending the assist information request signal is running in a quasi assist region, the driver assist server 200 proceeds to the processing of step S42. On the other hand, if the sending vehicle is not running in a quasi assist region, the driver assist server 200 ends the current processing.

At step S42, the driver assist server 200 judges whether there is a specific intersection candidate around the vehicle sending the assist information request signal based on the current position data included in the assist information request signal. If there is a specific intersection candidate around the vehicle sending the assist information request signal, the driver assist server 200 proceeds to the processing of step S43. On the other hand, if there is no specific intersection candidate around the vehicle sending the assist information request signal, the driver assist server 200 ends the current processing.

At step S43, the driver assist server 200 sends information relating to the specific intersection candidate around the vehicle sending the assist information request signal to the vehicle sending that signal as intersection assist information for quasi assist region use.

At step S44, the control device 60 of the vehicle 100 performs intersection assist based on the received intersection assist information.

For example, the control device 60 performs intersection assist when the host vehicle is running in an assist road segment if receiving intersection assist information for an assist region, that is, if the host vehicle is running inside an assist region.

On the other hand, if receiving intersection assist information for a quasi assist region, that is, if the host vehicle is running in a quasi assist region, the control device 60 performs intersection assist when the host vehicle is running in the assist road segment candidate and the amount of traffic of the surrounding area of the specific intersection candidate which the host vehicle is heading toward while running on the assist road segment candidate is increasing in tendency.

Whether or not the amount of traffic of the surrounding area of the specific intersection candidate is increasing in tendency can, for example, be judged based on road traffic information etc. acquired from an outside road traffic information center etc. For example, if the number of one or both of the vehicles and other traffic participants in the surrounding area of the specific intersection candidate increases compared with a predetermined time period before (for example, 15 minutes before), it can be judged that the amount of traffic of the surrounding area of the specific intersection candidate is increasing in tendency.

Note that, whether or not the amount of traffic in the surrounding area of the specific intersection candidate is increasing in tendency can, for example, be judged at the driver assist server 200 side based on current position data received from the vehicles 100. If in this way the driver assist server 200 side judges that the amount of traffic in the surrounding area of the specific intersection candidate is increasing in tendency, at the above step S43, it is also possible to include information regarding whether the amount of traffic in the surrounding area of the specific intersection candidate is increasing in tendency in the intersection assist information for the quasi assist region and send it to the vehicle 100.

The driver assist server 200 of the driver assist system 1 according to the embodiments explained above is configured to set, as assist road segment candidates roads with high frequencies of occurrence of at least one of accidents and near misses from among road segments of intersections in a grid region not set to an assist region and adjoining that assist region and send information regarding the specific intersection candidates having the assist road segment candidates to the vehicles 100. The vehicles 100 are configured to receive information regarding specific intersection candidates from the driver assist server 200 and perform intersection assist in accordance with the amount of traffic around the specific intersection candidates when running on the assist road segment candidates.

Due to this, in a region other than an assist region with a high frequency of occurrence of accidents and near misses (quasi assist region), it is possible to keep intersection assist from being unnecessarily performed while suitably performing intersection assist in accordance with need.

### (Fourth Embodiment)

Next, a fourth embodiment of the present invention will be explained. The present embodiment differs from the first embodiment on the point of setting a driver assist level for each assist road segment and performing intersection assist corresponding to the driver assist level. Below, this point of difference will be focused on in the explanation.

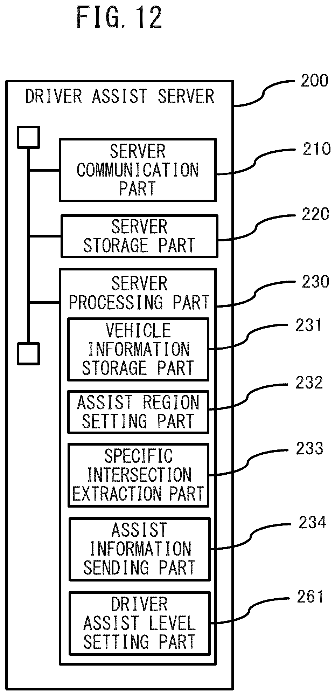

FIG. 12 is a schematic view of the configuration of a driver assist server 200 according to the present embodiment.

The server processing part 230 of the driver assist server 200 according to the present embodiment is further provided with a driver assist level setting part 261.

The driver assist level setting part 261 sets the driver assist level for when performing intersection assist in each assist road segment for each assist road segment. In the present embodiment, three driver assist levels are prepared from level 1 to level 3 in order of the lowest driver assist level up.

The higher the driver assist level, for example, it more possible to change a mode when reporting to a driver by the physical senses such visually, audibly, and tactilely (for example, display content, voice content, vibration rhythm, etc.) to a mode more easily drawing the attention of the driver. Further, for example, it is possible to increase the control quantity when reporting to the driver by physical senses (for example, the magnitude of the sound volume or vibration etc.) or the control quantity at the time of brake assist or automatic braking (for example, deceleration) etc. to increase the control quantity when performing intersection assist the higher the driver assist level. Further, for example it is possible to make the timing of reporting to the driver or performing brake assist or automatic braking etc. earlier to make the timing when performing intersection assist earlier the higher the driver assist level.

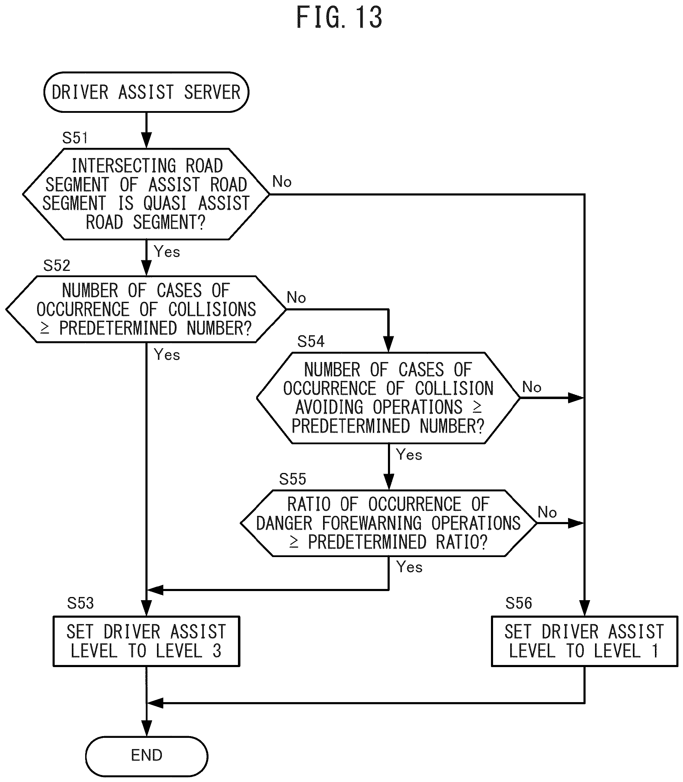

FIG. 13 is a flow chart for explaining one example of processing which the driver assist server 200 performs for setting a driver assist level of an assist road segment.

At step S51, the driver assist server 200 judges whether an intersecting road segment of the assist road segment is set to a quasi assist road segment. If the intersecting road segment of the assist road segment is set to a quasi assist road segment, the driver assist server 200 proceeds to the processing of step S52. On the other hand, if the intersecting road segment of the assist road segment is not set to a quasi assist road segment, the driver assist server 200 proceeds to the processing of step S56.

At step S52, the driver assist server 200 judges whether the number of cases of occurrence of collisions in the assist road segment is greater than or equal to a certain number. If the number of cases of occurrence of collisions in the assist road segment is greater than or equal to a certain number, the driver assist server 200 proceeds to the processing of step S53. On the other hand, if the number of cases of occurrence of collisions in the assist road segment is less than a certain number, the driver assist server 200 proceeds to the processing of step S54.

At step S53, the driver assist server 200 sets the driver assist level of the assist road segment to level 3.

At step S54, the driver assist server 200 judges whether the number of cases of occurrence of collision avoiding operations in the assist road segment is greater than or equal to a certain number. If the number of cases of occurrence of collision avoiding operations in the assist road segment is greater than or equal to a certain number, the driver assist server 200 proceeds to the processing of step S55. On the other hand, if the number of cases of occurrence of collision avoiding operations in the assist road segment is less than a certain number, the driver assist server 200 proceeds to the processing of step S56.

At step S55, the driver assist server 200 judges whether the ratio of occurrence of danger forewarning operations in the assist road segment is equal to or greater than a certain ratio. If the ratio of occurrence of danger forewarning operations in the assist road segment is equal to or greater than a certain ratio, the driver assist server 200 proceeds to the processing of step S53. On the other hand, if the ratio of occurrence of danger forewarning operations in the assist road segment is less than a certain ratio, the driver assist server 200 proceeds to the processing of step S56.

At step S56, the driver assist server 200 sets the driver assist level of the assist road segment to level 1.

In this way, in the present embodiment, the driver assist level of the assist road segment of a specific intersection having a quasi assist road segment is set to level 1 or level 3 based on the frequency of occurrence of accidents and near misses in that assist road segment. Further, for an assist road segment of a specific intersection not having a quasi assist road segment, the driver assist level is set to level 1.

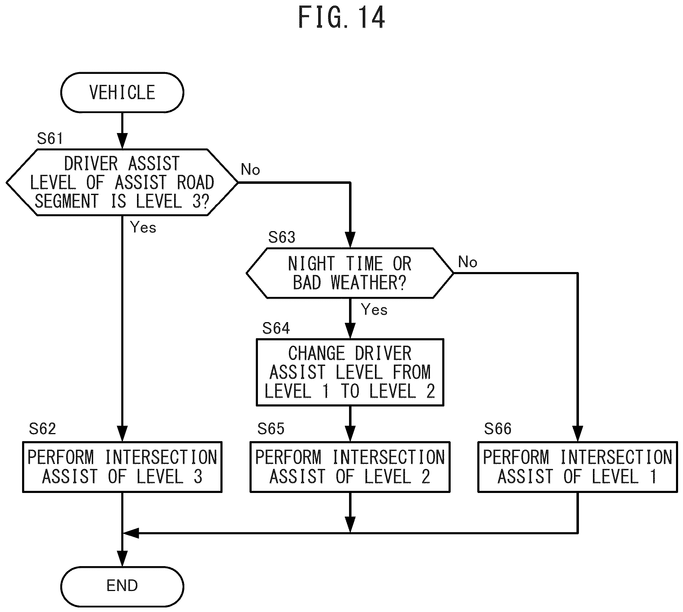

FIG. 14 is one example of the processing performed by the control device 60 of a vehicle 100 (driver assist part 71) for performing intersection assist accordance with the driver assist level.

At step S61, the control device 60 of the vehicle 100 judges whether the driver assist level of the assist road segment in which the host vehicle is running is level 3 based on the intersection assist information received from the driver assist server 200. The intersection assist information according to the present embodiment includes driver assist levels of the different assist road segments. If the driver assist level of the assist road segment on which the host vehicle is running is level 3, the control device 60 proceeds to the processing of step S62. On the other hand, if the driver assist level of the assist road segment on which the host vehicle is running is not level 3, the control device 60 proceeds to the processing of step S63.

At step S62, the control device 60 of the vehicle 100 performs intersection assist of the driver assist level of level 3. As explained above, the mode, control quantity, or timing of performance of intersection assist are changed in accordance with the driver assist level. For example, it is possible to change the mode of reporting to a driver to a mode more easily drawing the attention of the driver the higher the driver assist level. Further, it is possible to increase the control quantity when performing intersection assist such as increasing the volume of the reporting sound when reporting to a driver or increasing the deceleration at the time of brake assist or automatic braking. Further, it is possible to make the timing of performance when performing intersection assist earlier such as making the timing of reporting to a driver or performing brake assist or automatic braking earlier.

At step S63, the control device 60 of the vehicle 100 judges whether the environment around the host vehicle is night time or bad weather. The environment around the host vehicle can for example be judged based on the images of the surroundings detected by the surrounding sensors 10. If the environment around the host vehicle is night time or bad weather, the control device 60 proceeds to the processing of step S64. On the other hand, if the environment around the host vehicle is not night time or bad weather, the control device 60 proceeds to the processing of step S66.

At step S64, if the environment around the host vehicle is night time or bad weather, the control device 60 of the vehicle raises the driver assist level from the current level since accidents and near misses more easily occur compared with the case of day time or good weather. In the present embodiment, the driver assist level is changed from level 1 to level 2.

At step S65, the control device 60 of the vehicle 100 performs intersection assist of the driver assist level of level 2.

At step S66, the control device 60 of the vehicle 100 performs intersection assist of the driver assist level of level 1.

The driver assist server 200 of the driver assist system 1 according to the embodiments explained above is configured so as to set the driver assist level based on the frequency of occurrence of at least one of accidents and near misses in each assist road segment while the vehicles 100 are configured to change the modes, control quantities, or timings of performance of intersection assist based on the driver assist level.

Due to this, it is possible to optimize the control quantity or timing of performance of intersection assist based on the frequency of occurrence of at least one of accidents and near misses in each assist road segment.

Above, embodiments of the present invention were explained, but the above embodiments only show some of the examples of application of the present invention and are not intended to limit the technical scope of the invention to the specific constitutions of the embodiments.

For example, if several assist road segments are set for a specific intersection, it is also possible to set degrees of priority for the assist road segments based on the frequencies of occurrence of accidents and near misses at the assist road segments. The degrees of priority can be set for example in the order of the number of cases of occurrence of collisions, the number of cases of occurrence of collision avoiding operations, and the ratio of danger forewarning operations. The number of cases or ratio can be compared and the degrees of priority can be made higher the greater the number or cases or ratio in the assist road segments. Further, for example, if the details of collisions, that is, what among pedestrians, bicycles, automobiles, etc. were struck, are known, it is also possible to determine the degrees of priority in accordance with the details of the collisions.

Further, the intersection assist information may be made to include only information relating to the assist road segment with the highest priority. Due to this, for example, even if there is a restriction on the amount of data communication etc., it is possible to provide the intersection assist information to the vehicles 100 within that restriction.

Further, in the above embodiments, the computer program run in the control device 60 may also be provided in a form recorded in a computer readable portable recording medium such as a semiconductor memory, magnetic recording medium, or optical recording medium. Further, the computer program run may also be provided in a computer program product.

## Claims

1. A driver assist system (1) comprising:
a plurality of vehicles (100) at which predetermined driver assist is performed; and
a server (200) configured to be able to communicate with the vehicles (100), wherein
the server (200) is configured to:
set an assist region for making the vehicles perform driver assist and set as an assist road segment a road segment with a high frequency of occurrence of at least one of accidents and near misses from among the road segments of intersections in that assist region, based on predetermined information stored in the server (200); and
send information relating to a specific intersection having that assist road segment to the vehicles, and
the vehicles (100) are configured to:
receive information relating to that specific intersection from the server (200); and
perform the driver assist when running on the assist road segment.

2. The driver assist system (1) according to claim 1, wherein
the server (200) is configured to judge whether to set an intersecting road segment as a quasi assist road segment resembling an assist road segment based on a visibility of the intersecting road segment from the assist road segment if there is an intersecting road segment intersecting the assist road segment among the road segments of the specific intersection and that intersecting road segment has not been set as an assist road segment and
the vehicles (100) are configured to perform the driver assist when running in the quasi assist road segment.

3. The driver assist system (1) according to claim 1 or claim 2, wherein
the server (200) is configured to:
set as an assist road segment candidate a road segment with a high frequency of occurrence of at least one of accidents and near misses from among the road segments of intersections in a region not set in the assist region and adjoining the assist region: and
send information relating to a specific intersection candidate having that assist road segment candidate to the vehicles (100), and
the vehicles (100) are configured to:
receive information relating to that specific intersection candidate from the server (200); and
perform driver assist in accordance with an amount of traffic in the surroundings of the specific intersection candidate when running on the assist road segment candidate.

4. The driver assist system (1) according to any one of claim 1 to claim 3, wherein
the server (200) is configured to set a driver assist level for each assist road segment based on a frequency of occurrence of at least one of accidents and near misses of the assist road segment, and
the vehicles (100) are configured to change a mode, control quantity, or timing of performance of the driver assist based on the driver assist level.

5. The driver assist system (1) according to any one of claim 1 to claim 4, wherein
the driver assist is driver assist performing at least one of reporting to a driver of a vehicle, brake assist, and automatic braking in accordance with need when running on the assist road segment.

6. The driver assist system (1) according to any one of claim 1 to claim 5, wherein
the server (200) is configured to collect predetermined information from the vehicles (100), and,
the predetermined information includes at least one of data enabling judgment of whether a collision has occurred at the vehicles (100) and data enabling judgment of whether a collision avoiding operation has been performed for avoiding a collision at the vehicles (100).

7. The driver assist system (1) according to claim 6, wherein
the predetermined information includes data for a driver of a vehicle to be forewarned of danger and enabling judgment of whether a danger forewarning operation has been performed by the driver for preventing that in advance.

8. A driver assist server (200) comprising:
a communication part (210) configured to be able to communicate with vehicles (100);
a storage part (220) for storing information; and
a processing part (230), wherein
the processing part (230) is configured to:
set an assist region for making the vehicles (100) perform predetermined driver assist based on predetermined information stored in the storage part (220);
set, as an assist road segment where the driver assist is performed, a road segment with a high frequency of occurrence of at least one of accidents and near misses from among the road segments of intersections in that assist region based on predetermined information; and
send information relating to a specific intersection having that assist road segment to the vehicles (100).

9. A driver assist method of vehicles (100), the driver assist method
setting an assist region for making the vehicles (100) perform predetermined driver assist based on predetermined information stored in a server (200),
setting, as an assist road segment, a road segment with a high frequency of occurrence of at least one of accidents and near misses from among the road segments of intersections in that assist region based on predetermined information, and
making the vehicles (100) perform that driver assist when the vehicles (100) are running on that assist road segment.
